# EUROPEAN PATENT APPLICATION

(11) **EP 4 399 975 A1**
(43) Date of publication of application: **17.07.2024**
(21) Application number: 22306971.7
(22) Date of filing: 21.12.2022

(54) **BIOSOURCED EGG-COATING FLUID**

(71) Applicant: TOTALENERGIES ONETECH, 92400 Courbevoie (FR)
(72) Inventor: CHATTERJEE, Victor, 400710 NAVI MUMBAI (IN); PERUMALSAMY, Jayachandran, 400710 NAVI MUMBAI (IN)
(74) Representative: Lavoix

(57) **Abstract**

The present invention relates to the use of date seed oil as egg-coating fluid.

The present invention also relates to the use of date seed oil as egg-coating fluid, for increasing the shelf life of eggs.

The present invention also relates to a method for increasing the shelf life of an egg, said method comprising at least one step of coating said egg with date seed oil as defined above.

## Description

The present invention concerns a biosourced egg-coating fluid, and uses thereof for increasing the shelf life of eggs.

Eggs form an important part of the diet for people over all cultures and regions. They are a rich source of proteins, vitamins, minerals and fats. They are used in a variety of cuisines all over the world. Some functional properties possessed by eggs allow it to have a wide variety of applications such as emulsifying, foaming, gelling and whipping.

But eggs have a particular shelf-life and tend to deteriorate over time. This is due to the fact that egg shells have very small pores on their surfaces, through which water vapor and carbon dioxide escape, causing deterioration of the egg. In addition to the escape of water vapor and carbon dioxide, there may be entry of certain microorganisms through the shell causing bacterial decay of the egg.

This deterioration of the egg can be prevented by sealing the surface pores by using some oils.

Until now, the oils used as egg-coating fluids are mainly mineral oils.

The aim of the present invention is to provide a bio-sourced oil as egg-coating fluid, in particular for increasing the shelf life of eggs.

The aim of the present invention is to provide a bio-sourced oil as egg-coating fluid, in particular for increasing the shelf life of eggs, meeting the required optimum viscosity requirements in order to penetrate the egg pores.

Another aim of the present invention is to provide a bio-sourced egg-coating fluid, completely devoid of water in order to prevent any microbial growth, and also preferably devoid of any sort of odor.

Another aim of the present invention is to provide a bio-sourced egg-coating fluid, that does not adhere to the surface of the eggshell and drains off easily.

Another aim of the present invention is to provide a bio-sourced egg-coating fluid, having a low sulfur content, being in particular biodegradable, and preferably able to extend the shelf life of the eggs by 30 days.

Another aim of the present invention is to provide a bio-sourced egg-coating fluid, giving a natural and fresh-looking aspect to the eggshell, said fluid being preferably odorless, colorless, and tasteless.

Another aim of the present invention is to provide a bio-sourced egg-coating fluid, that drains easily and does not leave any trace of coating or odor after its application on the eggshell.

Thus, the present invention relates to the use of date seed oil as egg-coating fluid.

The present invention thus relates to a composition of bio-sourced oil derived from the seeds of dates available in tropical countries and iso-paraffinic oil derived from palm oil.

The egg-coating fluid according to the invention is thus a vegetable-based oil extracted from a non-edible part of a fruit.

The present invention also relates to an egg-coating fluid comprising date seed oil.

The present invention also relates to the use of date seed oil as egg-coating fluid, for increasing the shelf life of eggs.

The egg-coating fluid according to the invention extends the shelf life of eggs by creating a barrier on the pores of the egg-shells prohibiting escape of water vapor and carbon dioxide from the interior of the egg (as evidenced by weight loss) and preventing bacterial growth, as explained later in the examples of the present application.

Preferably, the shelf life of eggs that are coated with the egg-coating fluid according to the invention is extended of at least 30 days, in comparison with an uncoated egg.

The shell life of eggs is for example measured with the float test as detailed in the examples. In this test, the eggs were slowly immersed in water. If the eggs sink in water, they are considered to pass the test indicating little or no deterioration of the egg via the loss of water vapour and carbon dioxide. If the eggs float on the water, they are considered to fail the test, implying a great loss in weight due to the loss of water vapor and carbon dioxide from the interior of the egg causing its deterioration.

According to an embodiment, the egg-coating fluid as defined above does not include any mineral oil.

According to an embodiment, the egg-coating fluid as defined above does not contain any petroleum fraction.

According to an embodiment, the egg-coating fluid as defined above does not contain any surfactant or additive.

According to an embodiment, the egg-coating fluid as defined above consists of date seed oil. The egg-coating fluid according to the invention is thus made of date seed oil only. The present invention thus relates to date seed oil as egg-coating fluid, for increasing the shelf life of eggs.

According to an embodiment, the date seed oil used according to the invention as egg-coating fluid is biodegradable.

The biodegradability of the date seed oil used according to the invention is preferably measured by the OECD 301B standard test.

According to an embodiment, the biodegradability at 28 days of the date seed oil according to the invention is of at least 58% as measured according to the OECD 301B standard.

The egg-coating fluid according to the invention is preferably free from toxic chemicals/pesticides, is practically colorless and does not impart any color to the eggshell.

It also shows an excellent coverage on the surface of the eggshell, and as shown in the examples, it prohibits the growth of bacteria inside the egg for a period of at least 4 weeks.

According to an embodiment, the date seed oil used according to the invention has a kinematic viscosity at 40°C from 25 mm²/s to 41.6 mm²/s, and preferably from 30 mm²/s to 40 mm²/s. According to a preferred embodiment, said kinematic viscosity at 40°C is 35.2 mm²/s.

The kinematic viscosity at 40°C of date seed oil is for example measured according to ASTM D445 standard.

According to an embodiment, the date seed oil used according to the invention has a flash point from 140°C to 300°C, and preferably from 250°C to 320°C, and in particular from 280°C to 315°C. According to a preferred embodiment, the flash point of said date seed oil is 312°C.

The egg-coating fluid according to the invention has thus preferably a very high flash point indicating safe limits while handling.

The flash point of the oil is for example measured according to ASTM 93 standard.

According to an embodiment, the date seed oil used according to the invention has a pour point from -10°C to 10°C, and preferably from 0°C to 10°C. According to a preferred embodiment, the pour point of the date seed oil is 9°C.

The pour point of the date seed oil is for example measured according to ASTM D97 standard.

According to an embodiment, the date seed oil used according to the invention has a boiling point from 396°C to 637°C.

The boiling point of the oil is for example measured according to ASTM D86 as well as D2887 standard.

According to a preferred embodiment, the date seed oil used according to the invention has a sulfur content of less than 10 ppm.

The sulfur content of the oil is for example measured according to ASTM D4294 standard.

According to an embodiment, the date seed oil used according to the invention has a specific fatty acid profile. In particular, the date seed oil used according to the invention may comprise at least one fatty acid selected from the group consisting of: oleic acid (C₁₈H₃₄O₂) (C18:1), lauric acid (C₁₂H₂₄O₂) (C12:0), palmitic acid (C₁₆H₃₂O₂) (C16:0), myristic acid (C₁₄H₂₈O₂) (C14:0), linoleic acid (C₁₈H₃₂O₂) (C18:2), stearic acid (C₁₈H₃₆O₂) (C18:0), and mixtures thereof.

Preferably, the date seed oil used according to the invention comprises a mixture of fatty acids. Preferably, the date seed oil used according to the invention comprises oleic acid (C18:1), lauric acid (C12:0), palmitic acid (C16:0), myristic acid (C14:0), linoleic acid (C18:2), stearic acid (C18:0), and mixtures thereof.

According to an embodiment, the date seed oil used according to the invention comprises from 26.3% to 52.2%, preferably from 40% to 50%, even more preferably from 41.3% to 47.7%, and preferentially from 42% to 45%, of oleic acid by weight relative to the total weight of the fatty acids in said date seed oil. According to a preferred embodiment, the date seed oil used according to the invention comprises 42.6% by weight of oleic acid relative to the total weight of the fatty acids in said date seed oil.

According to an embodiment, the date seed oil used according to the invention comprises from 5.8% to 34.2%, preferably from 10% to 20%, more preferably from 10.2% to 17.8%, and even more preferably from 12% to 17%, of lauric acid by weight relative to the total weight of the fatty acids in said date seed oil. According to a preferred embodiment, the date seed oil used according to the invention comprises 16.2% by weight of lauric acid relative to the total weight of the fatty acids in said date seed oil.

According to an embodiment, the date seed oil used according to the invention comprises from 7.0% to 15.1%, preferably from 7.0% to 9.8%, and more preferably from 7% to 8%, of palmitic acid by weight relative to the total weight of the fatty acids in said date seed oil. According to a preferred embodiment, the date seed oil used according to the invention comprises 7.4% by weight of palmitic acid relative to the total weight of the fatty acids in said date seed oil.

According to an embodiment, the date seed oil used according to the invention comprises from 3.1% to 15.7%, preferably from 5% to 10%, and more preferably from 6.5% to 11.0%, of myristic acid by weight relative to the total weight of the fatty acids in said date seed oil. According to a preferred embodiment, the date seed oil used according to the invention comprises 6.5% by weight of myristic acid relative to the total weight of the fatty acids in said date seed oil.

According to an embodiment, the date seed oil used according to the invention comprises from 0.3% to 21.0%, preferably from 9.2% to 19.2%, and more preferably from 10% to 15%, of linoleic acid by weight relative to the total weight of the fatty acids in said date seed oil. According to a preferred embodiment, the date seed oil used according to the invention comprises 12.7% by weight of linoleic acid relative to the total weight of the fatty acids in said date seed oil.

According to an embodiment, the date seed oil used according to the invention comprises from 1.7% to 5.7%, preferably from 2.8% to 3.9%, and more preferably from 3% to 3.5%, of stearic acid by weight relative to the total weight of the fatty acids in said date seed oil. According to a preferred embodiment, the date seed oil used according to the invention comprises 3.2% by weight of stearic acid relative to the total weight of the fatty acids in said date seed oil.

The present invention also relates to an egg-coating fluid, comprising a date seed oil as defined above.

The present invention also relates to a method for increasing the shelf life of an egg, said method comprising at least one step of coating said egg with the date seed oil as defined above.

Preferably, the date seed oil is sprayed or is applied with a brush on the eggs.

### FIGURES

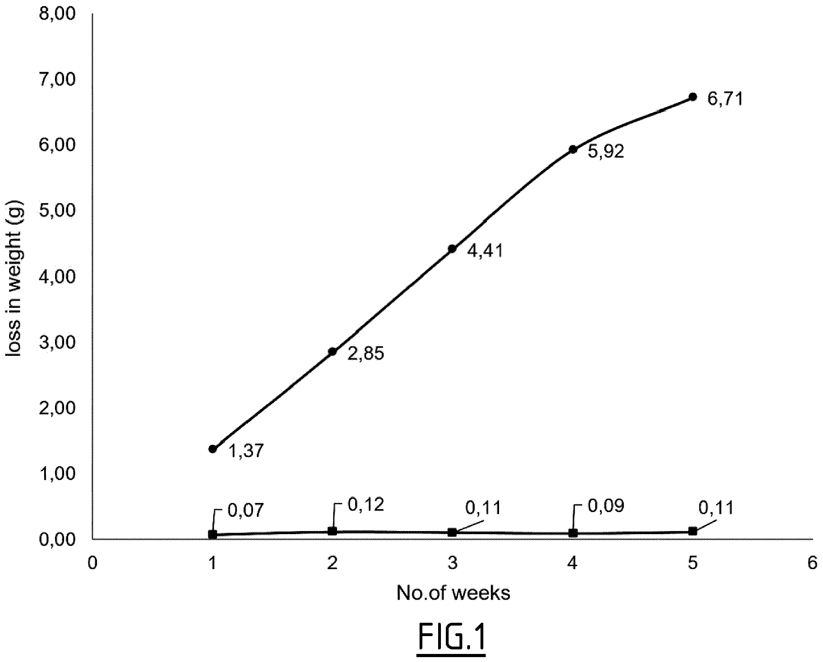

Figure 1 concerns the comparison of loss in weight for eggs coated with Formulation-1 (egg-coating fluid according to the invention) against uncoated eggs. The curve with the circles corresponds to the uncoated eggs and the curve with the squares corresponds to eggs coated with formulation-1.

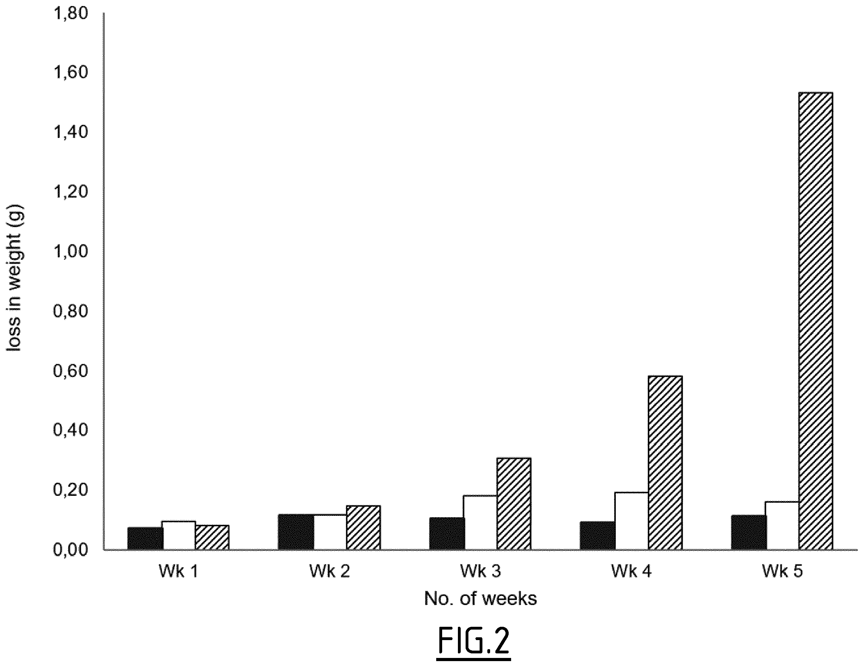

Figure 2 concerns the comparison of loss in weight for eggs coated with Formulation-1 against other mineral oil based egg-coating fluids. The black bars correspond to eggs coated with formulation-1, the white bars correspond to eggs coated with Drakeol 7, and the hatched bars correspond to eggs coated with Drakeol 5.

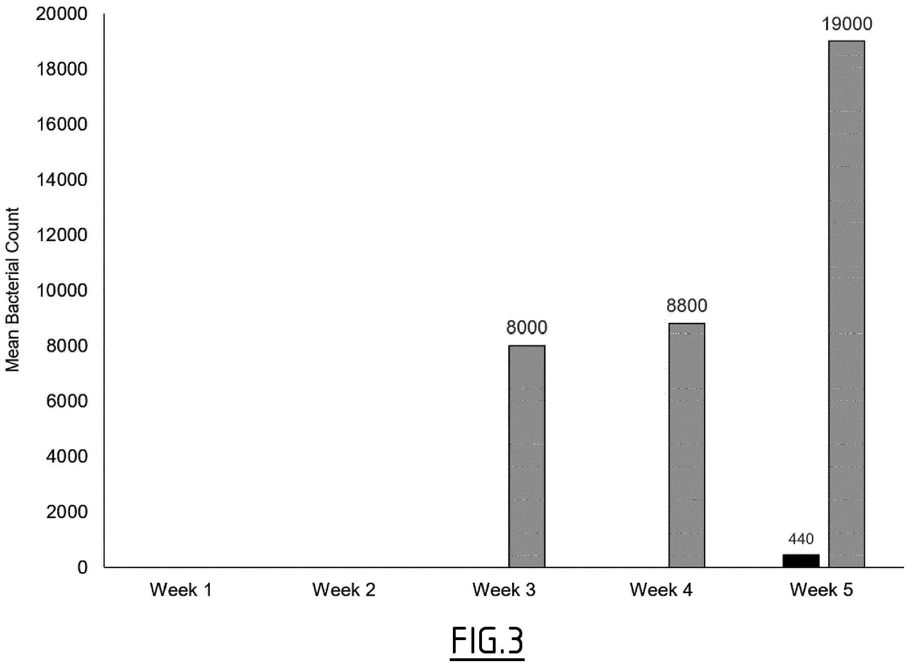

Figure 3 shows the results of the bacterial growth test. It shows a comparison of mean bacterial count of eggs coated with Formulation-1 against uncoated eggs. The black bars correspond to eggs coated with formulation-1, and the grey bars correspond to uncoated eggs.

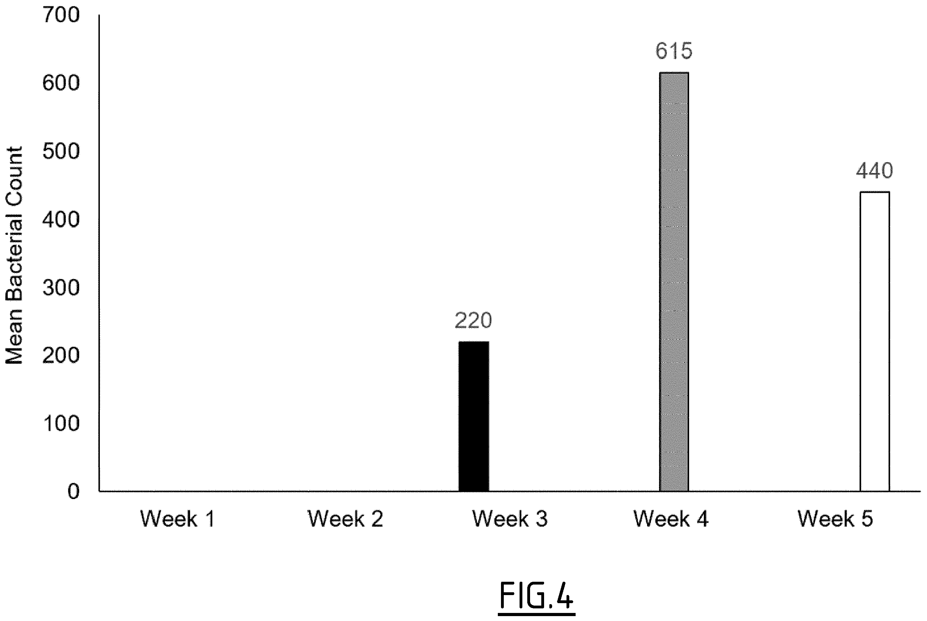

Figure 4 concerns the comparison of mean bacterial count of eggs coated with Formulation-1 against eggs coated with mineral-oil based egg-coating fluids. The white bars correspond to eggs coated with formulation-1, the black bars correspond to eggs coated with Drakeol 7, and the grey bars correspond to eggs coated with Drakeol 5.

### EXAMPLES

Formulation-1 was used in the examples as explained hereafter. This formulation corresponds to an egg-coating fluid as defined above and consists of date seed oil.

The fluid has the following parameters:

| | **Date seed oil** |
|---|---|
| *CAS number*/*molecular formula* | Vegetable oil having a specific fatty acids profile, rich in: |
| | oleic acid (C₁₈H₃₄O₂), |
| | lauric acid (C₁₂H₂₄O₂), |
| | palmitic acid (C₁₆H₃₂O₂), |
| | myristic acid (C₁₄H₂₈O₂), |
| | linoleic acid (C₁₈H₃₂O₂), |
| | stearic acid (C₁₈H₃₆O₂) |
| *Density at 15°C* | 921 kg/m³ |
| *Pour point* | 9°C |
| *Initial boiling point* | 396°C |
| *Final boiling point* | 637°C |
| *Flash point* | 312°C (COC) |
| *KV40 (cSt)* | 35.2 mm²/s |
| *KV100 (cSt)* | 7.65 mm²/s |
| *Biodegradability (OECD 301B standard)* | 58.13% |

The fatty acid profile of formulation-1 is as follows (the percentages are expressed in relation to the total weight of the fatty acids):

| | |
|---|---|
| Oleic acid | 42.6% |
| Lauric acid | 16.2% |
| Palmitic acid | 7.4% |
| Myristic acid | 6.5% |
| Linoleic acid | 12.7% |
| Stearic acid | 3.2% |

### Example 1: Float test

In this test, the eggs were slowly immersed in water. If the eggs sink in water, they are considered to pass the test ("PASS") indicating little or no deterioration of the egg via the loss of water vapor and carbon dioxide. If the eggs float on the water, the test is considered "FAIL" implying a great loss in weight due to the loss of water vapor and carbon dioxide from the interior of the egg causing its deterioration.

When Formulation-1 was applied on the surface of the eggs, the eggs were found to pass the float test until the fifth week, whereas for the uncoated eggs, the test failed in the third week itself.

The eggs were immersed during 15s.

The results are shown in the below tables:

**Table 1 concerns the weight loss of uncoated eggs.**

| **Week** | **Egg number** | **Weight of egg (g)** | **Weight loss of uncoated egg** | **Remarks** |
|---|---|---|---|---|
| 1 | 1 | 60.894 | 1.858 | **PASS** |
| 1 | 2 | 52.412 | 1.542 | **PASS** |
| 2 | 3 | 56.746 | 3.667 | **PASS** |
| 2 | 4 | 57.294 | 3.141 | **PASS** |
| 3 | 5 | 52.941 | 3.978 | **PASS** |
| 3 | 6 | 50.164 | 6.119 | FAIL |
| 4 | 7 | 50.009 | 8.092 | FAIL |
| 4 | 8 | 53.243 | 5.384 | FAIL |
| 5 | 9 | 51.288 | 9.076 | FAIL |
| 5 | 10 | 55.115 | 6.433 | FAIL |

**Table 2 concerns the weight loss of eggs coated with formulation-1.**

| **Week** | **Egg number** | **Weight of egg (g)** | **Weight loss of coated egg** | **Remarks** |
|---|---|---|---|---|
| 1 | 11 | 65.898 | **PASS** | 0.072 |
| 1 | 12 | 65.217 | **PASS** | 0.072 |
| 2 | 13 | 60.885 | **PASS** | 0.563 |
| 2 | 14 | 57.083 | **PASS** | 0.079 |
| 3 | 15 | 61.959 | **PASS** | 0.104 |
| 3 | 16 | 66.561 | **PASS** | 0.11 |
| 4 | 17 | 61.517 | **PASS** | 0.096 |
| 4 | 18 | 63.376 | **PASS** | 0.088 |
| 5 | 19 | 64.591 | **PASS** | 1.14 |
| 5 | 20 | 58.88 | **PASS** | 0.114 |

The conclusions are shown in the below table 3:

| No. of week | Uncoated Eggs | Eggs coated with formulation-1 |
|---|---|---|
| 1^{st} week | **PASS** | **PASS** |
| 2^{nd} week | **PASS** | **PASS** |
| 3^{rd} week | FAIL | **PASS** |
| 4^{th} week | FAIL | **PASS** |
| 5^{th} week | FAIL | **PASS** |

### Example 2: Loss in weight

The variation in the loss in weight of the eggs coated with Formulation-1 was compared with the loss in weight of the uncoated eggs for a period of 5 weeks. It was noted that the loss in weight was much lower for the eggs coated with an egg-coating fluid according to the invention, thus proving the high efficacy of the egg-coating fluid according to the invention.

The corresponding results are shown in Figure 1.

Also the loss in weight over a period of 5 weeks for the eggs coated with formulation-1 was compared with the eggs coated with other egg-coating oils (mineral-oil based) available in the market. The results are shown in Figure 2.

It was found that in some cases, formulation-1 exhibits similar weight loss values in the initial weeks in relation to the mineral-oil based products: Drakeaol 5, and Drakeol 7 (all products from Penreco, Calumet Speciality Partners, L.P.). However, from the 3^{rd} week onwards, formulation-1 shows better results than the mineral-oil based coating oils. This is due to the fact that Formulation-1 is able to clog the pores on the egg surface more efficiently than the mineral-oil based products.

### Example 3: Test for bacterial growth

This test was carried out as described hereafter.
1. Preliminary screening of healthy eggs:
   - The eggs are purchased freshly from the market.
   - The eggs are made to soak in water.
   - The eggs that settled down have been taken for the analysis.
   - They are washed clearly off from dust.
2. Sample Preparation
   - The eggs are weighed.
   - The weighed eggs are dipped in the sample oil for 30 seconds.
   - The coated eggs are allowed to rest and then their weight is again noted.
   - The eggs are marked and the test is carried out for 5 weeks.
3. Total Bacterial Count
   - The samples for the testing is performed based on IS 5402 : 2012 (Microbiology of food and animal feeding stuffs - Horizontal method for the enumeration of microorganism colony count technique at 30°C).
   - The egg is broken and the content is transferred into required peptone salt saline.
   - They are serially diluted using saline and plating procedure is done for enumerating the total bacterial count from the egg sample.

The same test is carried out for the Control sample also.

The eggs were tested for bacterial growth for a period of 5 weeks. It was found that the eggs coated with formulation-1 did not show any bacterial growth until the fifth week, whereas the uncoated eggs showed bacterial growth in high count from the 3rd week itself. The corresponding results are shown in Figure 3.

Also, the bacterial growth data for the eggs coated with formulation-1 was compared with eggs coated with other mineral-oil based egg coating fluids. It was found that formulation-1 prevented the bacterial growth within the egg until the 5^{th} week, whereas other egg-coating fluids could not prevent bacterial growth much earlier. (Note: Bacterial Growth tests for Drakeol 7 were not conducted after the 3^{rd} week and the tests for Drakeol 5 were not conducted after the 4^{th} week as they had already showed high amount of bacterial growth in the mentioned weeks.)

The corresponding results are shown in Figure 4.

The obtained results can be summed up as follows:
Float test data shows that eggs coated with the egg-coating fluid according to the invention passes the float test even on the 5^{th} week whereas the uncoated eggs fail the test already in the third week.
Monitoring the loss in weight of the eggs over a period of 5 weeks shows a very low value of weight loss in the case of the eggs coated with the egg-coating fluid according to the invention in comparison to the uncoated eggs.
Bacterial growth in case of the eggs coated with the egg-coating fluid according to the invention initiates at 5^{th} week whereas for uncoated eggs, bacterial growth starts from the 3^{rd} week. The egg-coating fluid according to the invention thus improves the anti-bacterial protection.
Comparing the egg-coating fluid according to the invention with other mineral-oil based coating oils shows that the egg-coating fluid according to the invention performs better and can prolong the shelf life of eggs until 5 weeks whereas the others fail at 3^{rd} and 4^{th} week.
The efficacy in terms of egg-coating application is improved with the egg-coating fluid according to the invention in comparison with the commercial products Drakeol 5/7 (white mineral oil).

## Claims

1. The use of date seed oil as egg-coating fluid.

2. The use of claim 1, for increasing the shelf life of eggs.

3. The use of claim 1 or 2, wherein the egg-coating fluid does not include any mineral oil and/or any petroleum fraction.

4. The use of any one of claims 1 to 3, wherein the egg-coating fluid consists of date seed oil.

5. The use of any one of claims 1 to 4, wherein the date seed oil is biodegradable.

6. The use of any one of claims 1 to 5, wherein the date seed oil has a kinematic viscosity at 40°C from 25 mm²/s to 41.6 mm²/s, and preferably from 30 mm²/s to 40 mm²/s, and in particular is 35.2 mm²/s.

7. The use of any one of claims 1 to 6, wherein the date seed oil has a flash point from 140°C to 300°C, and preferably from 250°C to 320°C, and in particular from 280°C to 315°C, and is preferably 312°C.

8. The use of any one of claims 1 to 7, wherein the date seed oil has a pour point from -10°C to 10°C, and preferably from 0°C to 10°C, and in particular 9°C.

9. The use of any one of claims 1 to 8, wherein the date seed oil has a sulfur content of less than 10 ppm.

10. The use of any one of claims 1 to 9, wherein the date seed oil comprises from 26.3% to 52.2%, preferably from 40% to 50%, even more preferably from 41.3% to 47.7%, and preferentially from 42% to 45%, and preferably 42.6%, of oleic acid by weight relative to the total weight of the fatty acids in said date seed oil.

11. The use of any one of claims 1 to 10, wherein the date seed oil comprises from 5.8% to 34.2%, preferably from 10% to 20%, more preferably from 10.2% to 17.8%, and even more preferably from 12% to 17%, and preferably 16.2%, of lauric acid by weight relative to the total weight of the fatty acids in said date seed oil.

12. The use of any one of claims 1 to 11, wherein the date seed oil comprises from 7.0% to 15.1%, preferably from 7.0% to 9.8%, and more preferably from 7% to 8%, and even more preferably 7.4%, of palmitic acid by weight relative to the total weight of the fatty acids in said date seed oil.

13. The use of any one of claims 1 to 12, wherein the date seed oil comprises from 3.1% to 15.7%, preferably from 5% to 10%, and more preferably from 6.5% to 11.0%, and even more preferably 6.5%, of myristic acid by weight relative to the total weight of the fatty acids in said date seed oil.

14. The use of any one of claims 1 to 13, wherein the date seed oil comprises from 0.3% to 21.0%, preferably from 9.2% to 19.2%, and more preferably from 10% to 15%, and even more preferably 12.7%, of linoleic acid by weight relative to the total weight of the fatty acids in said date seed oil.

15. The use of any one of claims 1 to 14, wherein the date seed oil comprises from 1.7% to 5.7%, preferably from 2.8% to 3.9%, and more preferably from 3% to 3.5%, and even more preferably 3.2%, of stearic acid by weight relative to the total weight of the fatty acids in said date seed oil.

16. A method for increasing the shelf life of an egg, said method comprising at least one step of coating said egg with date seed oil as defined in any one of claims 1 to 15.
